(19) Europäisches Patentamt
European Patent Office
Office européen des brevets

(11) Publication number: **0 454 097 B1**

(12) **EUROPEAN PATENT SPECIFICATION**

(45) Date of publication of patent specification: **28.09.94**

(51) Int. Cl.5: **A23L 1/221**, A23L 1/22, A23L 1/275, C09K 15/34

(21) Application number: **91106613.2**

(22) Date of filing: **24.04.91**

# (54) Labiatae derived antioxidant composition.

(30) Priority: **25.04.90 US 514311**
**15.04.91 US 685200**

(43) Date of publication of application:
**30.10.91 Bulletin 91/44**

(45) Publication of the grant of the patent:
**28.09.94 Bulletin 94/39**

(84) Designated Contracting States:
**AT BE CH DE DK ES FR GB GR IT LI LU NL SE**

(56) References cited:
**DE-A- 4 026 438**
**FR-A- 2 249 155**
**US-A- 3 732 111**
**US-A- 3 950 266**
**US-A- 4 450 097**

**DATABASE WPIL/DERWENT accession no. 91-061469 (09),1991, Derwent Publications Ltd., London, GB; & JP - A- 3009985 (MORI SEIYU K.K.) 17.01.1991**

(73) Proprietor: **NORAC TECHNOLOGIES INC.**
**4222 - 97 Street,**
**Greystone Pavillion**
**Edmonton, Alberta T6E 5Z9 (CA)**

(72) Inventor: **Uy Nguyen**
**4635-37 Avenue,**
**Edmonton, Alberta T6L 3V2 (CA)**
Inventor: **Frakman, Grigory**
**5504 - 179 Street**
**Edmonton, Alberta T6M 1X1 (CA)**
Inventor: **Evans, David A.**
**2428 - 117 Street**
**Edmonton, Alberta T6J 3R4 (CA)**

(74) Representative: **KUHNEN, WACKER & PARTNER**
**Alois-Steinecker-Strasse 22**
**D-85354 Freising (DE)**

EP 0 454 097 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to compositions of natural Labiatae herb extracts exhibiting enhanced antioxidant activity when compared to previously known extract compositions.

Animal and vegetable fats and oils (together with food, cosmetic and health-care products containing them) are subject to oxidative rancidity on storage. Such oxidative deterioration is accelerated on cooking and leads to objectionable stale, rancid or "warmed-over" flavour development. The oxidative process, once initiated, proceeds at a rate proportional to the level of oxidative by-products present, that is, it proceeds exponentially. The same processes can occur with natural food and cosmetic colourants such as the carotenoid pigments, leading to objectionable aroma and flavour and loss of colour intensity. As flavour, odour and colour are the principal factors by which food quality is judged, antioxidants suitable for incorporation into food products are valued for their capacity to reduce the destructive oxidative process to provide a longer shelf-life.

A number of synthetic chemical compounds are used as antioxidants in the food and cosmetic industries. These compounds primarily consist of a group of phenolic derivatives which include BHA (butylated hydroxyanisole), BHT (butylated hydroxytoluene), propyl gallate and TBHQ (tertiary butylhydroquinone). As these antioxidants are produced by synthetic chemical processes, their inclusion in food products is severely limited by regulation in regard to both level of use and food product application. In many applications they are completely banned. Other problems with this class of compounds include heat sensitivity, discolouration and susceptibility to loss by steam distillation. More recently, researchers in Japan have found links between BHA and cancer in laboratory experiments with rats.

One of the most important consumer trends in the food industry today is the demand for "all natural" food products that are free of chemical additives. This demand has focused attention on certain natural antioxidant materials obtained from plant sources. Most work in this area has concentrated on the antioxidant activity of natural herbs and spices such as cloves, ginger, mace, nutmeg and the Labiatae herbs rosemary, sage, thyme and oregano. Unfortunately, existing natural antioxidant extracts do not show a level of antioxidant activity sufficient to equal that of the synthetic chemical antioxidants they are designed to replace. Also, the replacement of synthetic chemical antioxidants by natural antioxidant extracts usually involves a higher level of usage, and hence, a higher level of cost. For example, several of the currently available commercial natural food antioxidant extracts have recommended usage rates for equivalence to BHA/BHT (1:1) at 0.02% of fat or oil as follows:

| | |
|---|---|
| Rosemary Deodorised (CAL/Pfizer)® | 0.10% |
| Spice Extract AR (Nestle)® | 0.05% |
| Flavor Guard I (OM Ingredients Co.)® | 0.02%-0.06% |
| Herbalox Type "O" (Kalsec Inc.)® | 0.05%-0.10% |

Furthermore, such products have usually been contacted with undesirable chemicals such as, for example, the organic solvents hexane, methanol, acetone and methylethyl ketone, which is in conflict with the preferred concept of an all natural product.

There is clearly a need for natural antioxidant extracts that have not been contacted with organic solvents or other undesirable chemicals and are sufficiently concentrated in antioxidant activity to completely replace the synthetic chemical antioxidants BHA and BHT on a one for one basis.

Various processes for obtaining antioxidant extracts from rosemary, for example, have been disclosed. The major problems to overcome are to obtain the extract with sufficient antioxidant activity to allow usage at levels equivalent to the synthetic antioxidants (.01-.05% of fat/oil) and to remove flavour, odour and colour components which may be detectable in the treated food product at the usage levels required. A review of the prior art shows that generally the following methods are taught to obtain antioxidant extracts from the Labiatae family of herbs: solvent extraction (polar and non-polar), aqueous alkaline extraction, extraction with vegetable oils or mono- and diglycerides or both, steam distillation and molecular distillation. These processes suffer from a number of disadvantages. The solvents used are not effectively selective for the active antioxidant compounds, and consequently, the resulting extracts are not as strong as the synthetic chemical antioxidants. The solvents used include compounds such as hexane, acetone and methyl chloride which can leave unwanted residues in the food products and which in some instances are prohibited from use in food by regulation. Processes using molecular distillation to concentrate the active fraction and to remove colour, aroma and flavour components result in a different type of dilution effect due to the presence of the distillation carrier which has a detrimental impact on the solubility of the extract in fats and

oils.

The application of supercritical carbon dioxide fluid to the extraction and fractionation of lipophilic materials has been reviewed by Stahl, et al, in "Dense Gases For Extraction and Refining" (1987). Tateo and Fellin, Perfumer and Flavorist, 13:48 (1988) describe a procedure in which ground rosemary leaves are subjected to extraction with supercritical carbon dioxide at a pressure of 300 bar and 35 °C. to remove the rosemary oleoresin containing the essential oil. The ground leaf residue remaining after extraction is then re-extracted with ethyl alcohol, filtered, evaporated and dried to obtain an antioxidant fraction. Antioxidant activity of the fraction (peroxide value (meq/kg) of prime steam lard at 100 °C. for 18 hours) was equivalent to a similar ethanol extract of ground leaf residue remaining after steam distillation to remove essential oil, equivalent to a commercial antioxidant extract (Rosemary Extract AR)® produced by more complex solvent technology, but less than BHA used at the same level (.03% fat/oil). Pfizer Corporation (ca. 1988) produce a commercial product (Rosemary Deodorised)® in which the oleoresin fraction obtained by extracting rosemary with supercritical carbon dioxide is then subjected to molecular distillation to improve colour and flavour. The resulting product contains about 80% capric and caprylic triglyceride (the distillation carrier), has poor oil solubility and relatively weak antioxidant activity.

The current international standard of commerce is Herbalox Seasoning Type "O"® and derived modifications, produced under US Patents No. 3,950,266; 4,283,429; 4,285,981; 4,315,947; 4,343,823 and 4,877,635. At the higher usage rates this product provides a pronounced rosemary flavour.

The present invention relates to the production of improved natural antioxidant extracts from the Labiatae family of domestic herbs by means of supercritical extraction and fractionation with carbon dioxide under specific operating conditions. A novel and unexpected aspect of the invention is that the antioxidant extracts so obtained exhibit greater antioxidant activity than extracts from the same raw materials produced by prior art processes. The optimum usage level for extracts from rosemary and sage is .02% of fat/oil, which produces antioxidant protection at least equal to the synthetic antioxidants BHA/BHT (1:1). The extracts exhibit satisfactory fat/oil solubility, contribute little colour, aroma and flavour when used at the recommended levels, and because of their low usage level, are more cost effective than currently available products produced by prior processes. The extracts are obtained without the use of organic solvents. When practiced in the preferred form, the process simultaneously provides a valuable essential oil by-product thereby enhancing the economics of the process.

## State of the Art

Chipault et al., Food Research 17:46 (1952), and Food Technology 10(5):209 (1956) showed that many ground spices and their organic solvent extracts exhibited antioxidant activity with the Labiatae members rosemary and sage being strongest.

Brieskorn et al., J. Org. Chem. 29:2293 (1964) isolated a phenolic diterpenic lactone of the ferruginol type from leaves of Rosmarinus officinalis and Salvia officinalis which was shown to be carnosol. Later, however, Wenkert et al., J. Org. Chem. 30:2931 (1965) showed that the major terpenic constituent of rosemary leaves was carnosic acid and that carnosol was an artificially produced derivative resulting from the ready oxidative conversion from carnosic acid. In 1969, Brieskorn and Domling, Zeitschrift für Lebensmitteluntersuchung und -forschung 141(1):10 (1969) showed that carnosic acid and carnosol were excellent antioxidants, and that the antioxidant property of rosemary and sage was caused by the presence of carnosic acid in the leaves of these plants. The antioxidant activity of carnosic acid and carnosol was shown to be equivalent to the synthetic antioxidant BHT.

Two further minor but structurally related antioxidants have been isolated and identified from rosemary leaves. These are rosmanol (Nakatani and Inatani, Agric. Biol. Chem. 45(10):2385 (1981); Inatani et al., Agric. Biol. Chem. 46(6) 1661 (1982); Inatani et al., Agric. Biol. Chem. 47(3):521 (1983)) and rosmaridiphenol (Houlihan et al., JOACS 61(6):1036 (1984)). Whereas rosmaridiphenol showed antioxidant activity equivalent to the synthetic antioxidants BHA and BHT, rosmanol showed four times that activity.

The chemical structures of carnosic acid, carnosol, rosmanol, rosmaridiphenol and a further compound, carnosic acid methyl ester (methyl carnosate), are as follows:

Carnosic Acid

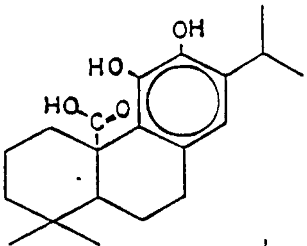

Carnosol

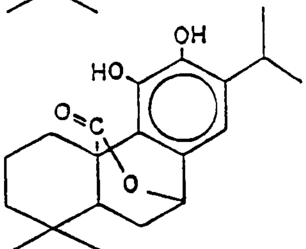

Rosmanol

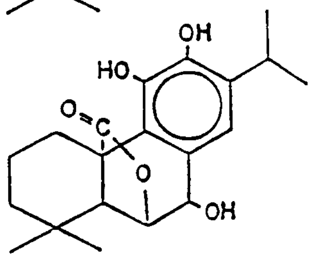

Rosmaridiphenol

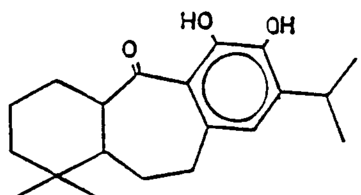

Methyl Carnosate

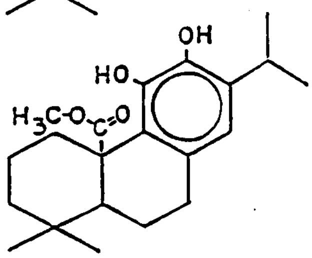

A natural Labiatae herb extract with preferred antioxidant properties would be one containing the highest concentration of the natural antioxidant compound carnosic acid. Furthermore, it is desirable that such an extract, designed for use in the food and cosmetic industries, be free from prior reaction with harmful synthetic chemicals such as, for example, the organic solvents hexane, methanol and acetone. For convenience in application, the preferred extract should be oil and fat soluble and in some cases soluble in food-grade grain alcohol. It is most important that the preferred extract be low in essential oil components which could impart unwanted flavor and aroma characteristics from the herb to the end-product.

A review of the prior art reveals that existing Labiatae herb extracts with antioxidant properties suffer from a number of deficiencies. These include: contact with undesirable organic solvents, the non-selective extraction of the Labiatae herbs resulting in a low concentration of antioxidant compounds in the extract, the presence of unwanted essential oil components which must be removed by an additional processing step, the formation of the oxidative derivative carnosol from carnosic acid as a consequence of chemical methods of preparation, and the further dilution of antioxidant concentration in the extract resulting from the addition of mono-, di- and triglycerides during extraction to enhance solubility or to act as a carrier for distillation or molecular distillation. This latter dilution further inhibits solubility in food- and cosmetic-grade grain ethanol.

Chang in U.S. Pat. No. 3,950,266 discloses the use of organic solvents such as ethyl ether and methanol to extract rosemary and sage leaves. The extract then requires further dilution in vegetable oil prior to vacuum or molecular distillation to remove essential oil flavor and aroma components. Wu et al.,

JAOCS 59(8):339 (1982) following a modified method of Chang demonstrated that the major antioxidant compound in the extract was carnosol which was tasteless as compared with the known bitterness of rosemary and sage antioxidant extracts. Clearly, the natural carnosic acid had been oxidised to the derivative carnosol as a result of the process.

Kimura in U.S. Patent No. 4,380,586 discloses the use of ethanol/hexane mixtures while Aesbach and Philippossian in Swiss Patent No. 672,048,A5 describe the use of hexane followed by ethanol extraction of the residue. Inatani et al. (ibid 1983) using a similar procedure (hexane/ethanol) found the major active antioxidant component to be the oxidative derivative carnosol.

Todd in U.S. Patent No. 4,877,635 discloses the use of acetone or other organic solvents followed by acetone with a precipitation step to remove acetone insoluble pro-oxidant substances. In a preferred embodiment, the extract is diluted 50% with mono-, di-, and tri-glycerides during processing. Steam distillation is still proposed to remove essential oil components.

Kimura in U.S. Patent No. 4,363,823 extracts fresh or previously steam-distilled herb with alcohol and then evaporates the alcohol to form a paste product. Further treatment with boiling water may follow to collect the water insoluble precipitate which can then be dried. The resulting product is low in antioxidant activity due to the poorly selective nature of the alcohol solvent.

Berner in U.S. Patent No. 3,732,111 extracts the ground dry spice with hot edible oil and removes the essential oil with steam under vacuum, resulting in a diluted extract of the antioxidant compounds which cannot be concentrated. The product is not ethanol soluble.

Tateo and Fellin, Perfumer and Flavorist 13:48 (1988) describe the use of supercritical carbon dioxide to remove the essential oil from rosemary leaves after which the residue is extracted with ethanol. Effectiveness of the extract was equivalent to a commercial extract prepared using organic solvents but was less than BHA at the same level of usage (0.03%).

CAL/Pfizer (ca. 1988) advertise a commercial product (Rosemary Deodorised)® in which the oleoresin fraction obtained by extracting rosemary with supercritical carbon dioxide is then subjected to molecular distillation to remove essential oil and improve color and flavor. The resulting product contains about 80% capric and caprylic triglyceride (the distillation carrier) and has poor oil solubility and relatively weak antioxidant activity.

## Brief Summary of the Invention

According to one aspect of the invention, the dried leaves of the Labiatae family of domestic herbs (Rosmarinus spp. or Salvia spp. or Oreganum spp. or Thymus spp.) are subjected to the following steps:

1. The leaves are ground to a fineness of less than 20 mesh, preferably 75% less than 45 mesh.
2. The ground leaves are then extracted with supercritical fluid carbon dioxide under conditions of:

| | | |
|---|---|---|
| Pressure: | 350 to 1000 bar | (preferably 500-1000 bar) |
| Temperature: | 31 to 120 °C. | (preferably 90-110 °C.) |
| Fluid Density: | .60 to 1.00 kg/l | (preferably .80-1.00 kg/l) |

3. Approximately 70% to 75% of the extract is precipitated from the supercritical fluid (antioxidant fraction) under conditions of:

| | | |
|---|---|---|
| Pressure: | 100 to 150 bar | (preferably 110-125 bar) |
| Temperature: | 40 to 100 °C. | (preferably 75-85 °C.) |
| Fluid Density: | .20 to .40 kg/l | (preferably .25-.35 kg/l) |

4. The remaining extract is precipitated under non-supercritical conditions (essential oil fraction) of:

| | | |
|---|---|---|
| Pressure: | 20 to 50 bar | (preferably 30-35 bar) |
| Temperature: | -10 to 25 °C. | (preferably 5-20 °C.) |
| Gas Density: | <.15 kg/l | (preferably .05-.10 kg/l) |

The process may be conveniently carried out in commercially available supercritical fluid extraction apparatus with at least one extractor vessel and at least two separation vessels, such as, for example, those manufactured by Udhe GMBH and Nova Werke AG; provided the extractor is engineered to operate at a pressure of 350 bar or greater.

The invention provides an improved natural antioxidant composition derived from the Labiatae family of domestic herbs when made by the foregoing process. The composition has not been contacted with organic solvents and contains less than 5 ml of water-distillable essential oil per 100 grams. The composition shows enhanced antioxidant activity in comparison with existing Labiatae extracts and comprises not less than 30% by weight of the naturally occurring compound carnosic acid. The composition is soluble for the use intended in food-grade fats and oils and soluble for the use intended in food-grade grain ethanol.

The composition is suitable for use in food, cosmetic and pharmaceutical products at inclusion levels of 0.02-0.03% of fat or oil to retard the oxidative process, thereby extending taste, aroma and color shelf-life of such products.

The composition can be used directly or predissolved in acceptable grade fats, oils or grain ethanol, or it can be dissolved or dispersed in edible food solvents. The composition can be used in a partially decolorized form.

When the composition is dissolved in prime steam lard at the level of 0.02% and incubated in loosely capped containers for 18 hours at 100 °C, the resulting peroxide value of the lard will be typically not greater than that of an identically treated sample containing 0.02% BHA/BHT (1:1) in place of the composition of the invention.

The composition can be formulated from different Labiatae extracts and can be standardised as to natural antioxidant content to meet prescribed antioxidant activity.

## Brief Description of the Drawings

Figure 1 is a graph showing the optimum concentration of antioxidant obtained by the invention vs. commercially available antioxidants when tested in lard.

Figure 2 shows the relative antioxidant strengths of extracts obtained by the invention vs. commercially available antioxidants when tested in lard.

Figure 3 shows the antioxidant power of an extract obtained by the invention added to the binder for chicken cutlets vs. chicken cutlets with standard binder.

Figure 4 shows the antioxidant power to protect colour loss of carotenoid pigments vs. untreated material.

## Description of the Best Mode

The invention is a process for extracting antioxidant substances from herbs under conditions which preserve the antioxidant power of the substances without contaminating the substances with potentially harmful solvents, distillation carriers or other additives. The antioxidants obtained by the inventive process are readily soluble in fats and oils at the .01-.05% levels needed to impart an acceptable antioxidizing effect, and the process yields a substance which adds no flavour, odour or colour to the treated fat or oil.

Commercially useful antioxidant extracts have been found to be obtainable from the Labiatae family of domestic herbs. These herbs include rosemary (Rosmarinus spp.), sage (Salvia spp.), oregano (Oreganum spp.), and thyme (Thymus spp.). In accordance with the invention, dried leaves of Labiatae herbs are ground and extracted under high pressure of at least about 350 bar with supercritical fluid carbon dioxide at a temperature of from 31 °C. to 120 °C. The extraction preferably proceeds at a rate so that the optimal amount of antioxidant is extracted within about one hour.

Each gas has a critical pressure ($P_c$) and a critical temperature ($T_c$) above each of which a supercritical fluid state is attained. Solvent properties of such supercritical fluids have been found to be a complex function of the fluid density which in turn is a complex function of temperature and pressure. Thus, by

varying the temperature and pressure of a supercritical fluid, extractions and precipitations can be carried out. Carbon dioxide has proven to be a particularly advantageous gas to use in supercritical fluid extractions because it possesses good solvent properties, has low chemical reactivity, low toxicity, is not flammable, is inexpensive and may be readily recycled, and leaves no undesirable residues in the precipitates. Carbon dioxide has a $P_c$ of 73.8 bar, a $T_c$ of 31.1 °C and a density at the $P_c$ and $T_c$ of 0.468 g/cc.

The supercritical fluid carbon dioxide containing extracted antioxidants and other substances is subjected to a first precipitation step in which the antioxidant substances are collected. The first precipitation occurs under conditions of reduced pressure as compared to the extraction step, e.g. 100-150 bar, but maintaining the carbon dioxide in its supercritical fluid state.

Additional commercially valuable substances, such as essential oils, are collected in a second precipitation step wherein the pressure and temperature of the carbon dioxide are reduced to non-supercritical conditions. The gaseous carbon dioxide from the second precipitation is preferably recycled to the extraction step of the process of the invention.

Preferably, the process of the invention is carried out in a commercially available pressure extraction apparatus. The basic technology of supercritical fluid extraction is well known. In fact, the teachings of this art indicate that cosolvents or entrainers such as propane or ethanol are usually needed to achieve the desired extraction efficiency, supercritical carbon dioxide not being a good enough solvent in its pure state.

While the preferred starting material is ground dried Labiatae leaf, the raw material may comprise ground Labiatae leaf residue from prior extraction of the essential oil, by steam distillation, subcritical carbon dioxide or supercritical carbon dioxide under conditions of pressure of less than 350 bar. The yield and rate of extraction of the antioxidant with supercritical fluid carbon dioxide increases with higher extraction pressure from 350 bar up to 1000 bar without reducing the antioxidant activity of the extract. Yields and rates of extraction at or below 350 bar are reduced to the point where the process is not economic. The preferred range of extraction pressure is 500-1000 bar which results in optimum yields and rates of extraction.

The yield and rate of extraction of the antioxidant according to the invention increases with a higher extraction temperature in the range of from 31 °C. up to 120 °C. without reducing antioxidant activity. At extraction temperatures much above 110 °C., however, heat damage can occur to both the extracted components and the extracted residue. The preferred extraction temperature range is 90-110 °C. which has been found to give optimum yields and rates of extraction.

It is preferred that the supercritical fluid used in the process of the invention is carbon dioxide without the addition of cosolvents such as ethanol or propane. Such cosolvents increase the yields of the antioxidant extracts but do so non-selectively so that the resulting antioxidant activity of the extracts is reduced when compared with antioxidant extracted with pure carbon dioxide.

It has been the surprising result of this invention that the use of pure carbon dioxide under the conditions of this process results in the extraction of antioxidant substances having antioxidant activity comparable to the synthetic antioxidants BHA and BHT. Since pure carbon dioxide is used in the process, the resulting antioxidant extract is free of undesirable contaminants.

Additionally, precipitation conditions for the antioxidant provide a substantial separation of antioxidant components from essential oils. Thus, the antioxidants obtained by the invention can be added to foods or cosmetics without imparting unwanted flavours or odours to them.

The antioxidant extracts obtained pursuant to the invention, which exhibit a resinous character at ambient temperature, may be ground to a fine powder at temperatures of -18 °C. or less and either dissolved or dispersed in food-grade animal or vegetable oils and fats for incorporation into food, cosmetic and health-care products. Alternatively, such powder can be incorporated directly into the products.

A non-oil solution of the antioxidant extracts obtained by the process of the invention can be prepared by dissolving the extract in ethanol, e.g. 95% ethyl alcohol, and filtering off any insoluble residue. This ethanol tincture may be preferred over an oil or fat carrier for some applications.

The antioxidant extracts obtained from Rosmarinus officinalis and Salvia officinalis by the process of the invention exhibit antioxidant activity at least equal to the synthetic antioxidants BHA/BHT (1:1) when used at .02% of fat/oil and are superior in antioxidative strength to other commercially available natural antioxidants.

The invention will be more fully understood by reference to the following examples. However, these examples are merely intended to illustrate embodiments of the invention and are not to be construed as limiting the scope of the invention.

**EXAMPLE 1**

The raw materials used in the examples comprised commercial samples of the following domestic herbs:

| | |
|---|---|
| Rosemary (Spanish) | R. officinalis |
| Sage (Albanian) | S. officinalis |
| Sage (Greek) | S. triloba |
| Oregano (Greek) | O. vulgare |
| Thyme (French) | T. vulgaris |

These materials were purchased through normal spice-trade channels in the "whole leaf" form, in quantities of 25kg to 100kg units. Prior to extraction the leaves were passed once through a hammer mill (Fitzmill Model D-6) with a #0030 screen. Liquid nitrogen was injected into the grinding chamber during grinding at a rate sufficient to maintain the temperature of the emerging ground leaves at less than -20 °C. The ground leaves emerged from the mill in the form of a very fine powder with the particle size distribution characteristics given in Table 1.

**TABLE 1**

**SIEVE ANALYSES OF GROUND MATERIALS**

**% RETAINED (MEANS OF 3 SAMPLES)**

| MESH | R off. | S off. | S tri. | O vul. | T vul. |
|---|---|---|---|---|---|
| 20 | .12 | 1.88 | 2.01 | .22 | .55 |
| 30 | 1.54 | 1.62 | 3.55 | .40 | .25 |
| 45 | 11.12 | 15.45 | 20.04 | 9.14 | 8.94 |
| 50 | 22.23 | 22.03 | 30.53 | 12.61 | 8.88 |
| 60 | 13.72 | 28.67 | 32.95 | 16.62 | 16.19 |
| >60 | 51.27 | 30.35 | 10.92 | 60.95 | 65.37 |

The figures in Table 1 indicate that the grinding procedure is satisfactory for producing a fine powder with approximately 75% of the particles capable of passing through a 45 mesh screen thereby enhancing the efficiency of extraction with supercritical fluid solvent. Samples of the ground leaf material were then subjected to laboratory analysis for total ether extract (AOCS Official Method Bc 3-49), essential oil (ASTA Official Method 5.0) and moisture (AOCS Official Method F 1a-44). Results of the analyses are shown in Table 2. The figures indicate that all raw materials have compositional characteristics in line with average quality commercial herbs. In particular the essential oil levels show that grinding under liquid nitrogen has resulted in no significant loss of volatiles by heat generated during the grinding process.

TABLE 2

| COMPOSITION OF RAW MATERIALS (MEANS OF 3 SAMPLES) | | | |
|---|---|---|---|
| HERB | MOISTURE (%) | ETHER EXTRACT (%) | ESSENTIAL OIL (ml/100gm) |
| R. officinalis | 7.2 | 17.4 | 1.7 |
| S. officinalis | 8.0 | 12.7 | 1.3 |
| S. triloba | 8.0 | 15.4 | 2.3 |
| O. vulgare | 4.3 | 8.0 | 2.9 |
| T. vulgaris | 6.6 | 7.1 | .7 |

**EXAMPLE 2**

Approximately 1.25 kg samples of each of the five raw materials ground according to the procedure of Example 1 were extracted in a pilot supercritical apparatus manufactured by Udhe GMBH. This apparatus comprises two extractor vessels and one separation vessel each of 4 litres capacity with the option to configure the system as one extractor and two separators. The samples were first extracted at 300-350 bar and 35-40 °C. according to Tateo, et al, Perfumer and Flavorist, 13:48 (1988) with a carbon dioxide flow rate of 45 kg/hr and for sufficient time (usually 30-60 min.) to give a $CO_2$:feedstock ratio of 24:1 (rosemary and sage) or 12:1 (oregano and thyme). The extracts were precipitated and recovered in the separator vessel at 30 bar and 5 °C. as a series of green-brown liquid extracts with essential oil contents in excess of 50ml/100gm of extract. These extracts are the "300 bar extracts". The ground herb residues remaining after 300 bar extraction were then re-extracted at 500 bar and 40 °C. with a $CO_2$ flow rate of 45 kg/hr for sufficient time (30-60 min.) to give a $CO_2$:feedstock ratio of 32:1 (rosemary and sage) or 12:1 (oregano and thyme). The extracts were precipitated and recovered in the separator vessel at 50 bar and 35 °C. as a series of light greenish brown solid to semi-solid resinous materials which melted to viscous liquids at 80 °C. These extracts are the "500 bar extracts". Samples of the residues remaining after both 300 bar and 500 bar extractions were then extracted in the laboratory (Soxhlet) with 95% ethyl alcohol. Antioxidant activities of all extracts were then measured by means of an accelerated storage test in which the extracts were dissolved in prime steam lard at the level of .03% and incubated in loosely capped bottles in a laboratory oven at 100 °C. for 18 hours. Two control samples were also incubated consisting of lard with no antioxidant (Control) and lard with .03% BHA/BHT (1:1). At the completion of the incubation period the peroxide values (meq/kg) of the samples were measured (AOAC Methods 28.025/28.026). Results of the antioxidant activity tests are shown in Table 3.

## TABLE 3

PEROXIDE VALUES (meq/kg) FOR PRIME STEAM LARD AT 100 °C. FOR 18 HOURS (MEANS OF 3 REPLICATES)

| HERB | EE 300 RES. | 500 EXT. | EE 500 RES. |
|---|---|---|---|
| R. officinalis | 4.9 | 1.4 | 6.4 |
| S officinalis | 3.8 | 1.6 | 8.3 |
| S. triloba | 8.7 | 2.3 | 7.1 |
| O. vulgare | 11.1 | 3.6 | 9.5 |
| T. vulgaris | 6.5 | 2.8 | 5.9 |
| CONTROLS | | | |
| Lard pretreatment = | .5 | | |
| Control lard = | 27.2 | | |
| BHA/BHT (1:1) = | 1.8 | | |

The ethanol extracts of the 300 bar residues (EE 300 RES.) have moderately good antioxidant properties as shown by Tateo, et al, (1988) for rosemary but they do not match the strength of the synthetic antioxidants BHA/BHT when used at the same level. The superiority of the supercritical extracts at 500 bar (500 EXT.) over the ethanol extracts is a novel and unexpected result. The 500 bar extracts exhibit antioxidant activity at least equal to BHA/BHT (1:1) in the case of both R. officinalis and S. officinalis and slightly less in the cases of S. triloba, O. vulgare and T. vulgaris. Ethanol extracts of the 500 bar residues (EE 500 RES.) show reduced antioxidant activity indicating that the 500 bar extracts removed the majority of the active antioxidant compounds. The highest levels of antioxidant activity are unique to the extracts obtained with supercritical carbon dioxide between 350 and 500 bar. The relative order of antioxidant strength for the 500 bar extracts is sage>rosemary>thyme>oregano which reflects the known relative antioxidant strengths of the ground herbs (Chipault et al 1956).

**EXAMPLE 3**

Approximately 1.25 kg samples of each of the five raw materials were ground according to the procedure of Example 1 and extracted in the apparatus described in Example 2 with the one extractor/two separators configuration. Pressure and temperature parameters for the three vessels are shown in Table 4.

## TABLE 4

### EXTRACTION AND FRACTIONATION PARAMETERS

| HERB | EXTRACTOR (bar/°C.) | 1st SEPARATOR (bar/°C.) | 2nd SEPARATOR (bar/°C.) |
|---|---|---|---|
| R. officinalis | 500/100 | 115/85 | 33/17 |
| S. officinalis | 500/95 | 120/80 | 35/15 |
| S. triloba | 500/95 | 115/75 | 35/10 |
| O. vulgare | 500/95 | 120/75 | 33/10 |
| T. vulgaris | 500/95 | 120/80 | 35/15 |

The carbon dioxide flow rate was 45 kg/hr and the $CO_2$:feedstock ratios were 32:1 (rosemary and sage) and 12:1 (oregano and thyme). The antioxidant extracts were recovered from the first separator vessel as light greenish brown solid to semi-solid resinous materials. The essential oil extracts were recovered from the second separator as a mixture of greenish brown aromatic liquid oils and water. These mixtures were then centrifuged to separate the oils from the water following which the oils were decanted off. Essential oil contents of the fractions were measured by the method of Example 1 and activity of the antioxidant extracts at .03% usage by the method of Example 2. Results are shown in Table 5 and demonstrate the capacity of the preferred process to simultaneously produce both high quality essential oils with volatile oil contents in excess of 80 ml/100gm and natural antioxidant extracts comparable (in the cases of rosemary and sage) in antioxidant activity to the synthetic antioxidants BHA and BHT but with less than 5ml/100gm of volatile aromatic and flavour components. The preferred operating parameters given Table 4 have resulted in economically viable yields of both products.

TABLE 5

| COMPOSITION AND ACTIVITIES | | | | | |
|---|---|---|---|---|---|
| HERB | ESSENTIAL OIL FRACTION | | ANTIOXIDANT FRACTION | | |
| | YIELD (%) | ESSENTIAL OIL (ml/100gm) | YIELD (%) | ESSENTIAL OIL (ml/100gm) | P.V. (meq/kg) |
| R. officinalis | 1.6 | 94.3 | 5.2 | 2.8 | 1.5 |
| S. officinalis | 1.7 | 88.0 | 5.7 | 4.1 | 1.5 |
| S. triloba | 2.2 | 90.2 | 6.0 | 2.3 | 2.1 |
| O. vulgare | 2.5 | 94.4 | 3.2 | 4.7 | 3.8 |
| T. vulgaris | .7 | 81.6 | 2.0 | 4.2 | 2.9 |
| CONTROLS<br>Lard pretreatment = .5<br>Control lard = 33.7<br>BHA/BHT (1:1) = 1.9 | | | | | |

**EXAMPLE 4**

Five grams each of rosemary and sage antioxidant extracts prepared by the method of Example 3 were dissolved in 90 grams of refined Canola oil which had been heated to 85 °C. to facilitate solubility. The extracts dissolved in the oil without difficulty to give a 10% Labiatae antioxidant oil solution ("Labex")®. The Labex® solution was then tested for comparative antioxidant activity with three commercially available

natural antioxidants (Herbalox Type "O"®, Spice Extract AR®, Flavor Guard I)® and the synthetic antioxidant mixture BHA/BHT (1:1). The test method was that of Example 2 at usage levels of .01, .02, .03 and .05% where the usage level was based on active ingredient (Labex®, BHA/BHT (1:1)) or "as is" (commercial antioxidants). The results are shown in Figure 1. It is evident from Figure 1 that the 1:1 mixture of rosemary and sage extracts showed optimum activity at the .02% usage rate (.20% of 10% oil solution) which was equivalent to BHA/BHT (1:1) and superior to the commercial antioxidants at all levels.

**EXAMPLE 5**

The Labex solution prepared in Example 4 was tested for relative antioxidant strength in comparison with the natural antioxidant standard of commerce (Herbalox Type "O")® and the synthetic antioxidant standard of commerce (Tenox 4)® by a modification of the procedure in Example 2. The oven treatment period was extended until all samples had reached a peroxide value of 20 meq/kg which is accepted as the organoleptic detectable rancidity level for lard. Peroxide values were measured once each day until the 20 meq/kg level had been exceeded. Usage levels were .05% (Tenox 4)®, .03, .05 and .10% (Herbalox)® and .30, .50 and 1.00% (Labex®, equivalent to .03, .05 and .10% active ingredient). Results are shown in Figure 2 which clearly demonstrates the superiority of the rosemary/sage natural antioxidant extracts. The Labex® oil solution at .30% (.03% active ingredient) produces a longer incubation time to a peroxide value of 20 meq/kg in comparison with Herbalox® at .03%. Labex® at .50% and 1.00% (.05 and .10% active ingredient) result in significantly longer protection than both Herbalox® at .05 and .10% and Tenox® 4 at .05%.

**EXAMPLE 6**

Three 22,65 kg (50 lb) batches beef/pork sausage were manufactured in a commercial facility. The binder additives for each batch were formulated to contain:

Batch 1: Control - Standard commercial binder (no antioxidant).

Batch 2: Erythorbate - Standard binder including sodium erythorbate at .03% of finished product.

Batch 3: Treatment - Standard binder including the rosemary antioxidant produced by the process of Example 2 at .03% of finished product.

The rosemary antioxidant extract was easily plated onto the salt content of the binder and blended with the other binder constituents. The sausages were stored at 4 °C. for 7 days following which fat from sample sausages was extracted with dichloromethane and subjected to accelerated storage at 100 °C. for 18 hours in accordance with the method of Example 2. The resulting peroxide values are shown in Table 6 which clearly demonstrates the capacity of the antioxidant extract to incorporate into a food product and remain active during storage.

TABLE 6

ANTIOXIDANT IN BEEF/PORK SAUSAGE

| BATCH | PEROXIDE VALUE (meq/kg) |
|---|---|
| Control | 33.9 |
| Erythorbate | 17.0 |
| Treatment | 1.4 |

## EXAMPLE 7

Rosemary antioxidant extract produced by the method of Example 2 was mixed into commercial refined Canola vegetable oil and commercial margarine (Canbra "West" brands) at a temperature of 85 °C. at levels of .03 and .10%. Control samples containing no antioxidant and samples containing BHA/BHT (1:1) at .03 and .10% were also prepared. The samples were incubated at 100 °C. for 18 hours in accordance with the method of Example 2. Resulting peroxide values are shown in Table 7 which demonstrates that the rosemary antioxidant extract was more effective than BHA/BHT (1:1) at both levels in protecting the products from oxidation.

TABLE 7

ANTIOXIDANT IN CANOLA OIL AND MARGARINE

| | PEROXIDE VALUES (meq/kg) | |
|---|---|---|
| ANTIOXIDANT | CANOLA OIL | MARGARINE |
| R. officinalis (.03%) | 5.2 | .6 |
| BHA/BHT (1:1) (.03%) | 8.8 | .8 |
| R. officinalis (.10%) | 5.8 | .9 |
| BHA/BHT (1:1) (.10%) | 9.0 | 1.2 |
| Control | 10.8 | 3.1 |
| Pretreatment | .6 | .4 |

## EXAMPLE 8

Forty grams of Sage (S. officinalis) antioxidant extract produced by the method of Example 3 plus 15 grams of rosemary antioxidant extract produced by the method of Example 3 were dispersed in 100 grams of refined Canola oil which had been heated to a temperature of 85 °C to facilitate solubility of the antioxidant extract. The oil solution was then added to a commercial seasoned meat binder (UFL Foods Product No. EE820) used in the production of cooked-then-frozen chicken cutlets. Two batches of cutlets were manufactured each utilising 550 kg of mechanically deboned chicken with a fat content of 20%. One batch contained the standard binder (Control) and the other batch (Treatment) contained the standard binder to which the antioxidant oil solution had been added by plating it onto the salt component of the binder. Thus, the rosemary/sage antioxidant extract was added to the product at the rate of .01% of meat or .05% of fat. The resulting pre-cooked cutlets were packaged in airtight wrap and stored at 4 °C. Two random samples were taken from each batch on a weekly basis and duplicate measurements made of oxidative rancidity on each sample by means of the TBA method of Kakuda et al, JAOCS July:773 (1981).

Results are shown in Figure 3. By Day 14 the mean difference in TBA values between the two groups was significant at the 5% level and at the 1% level thereafter. After 4 weeks of storage the Treatment cutlets showed TBA values of less than 2 (acceptable) while the Control values were over 6 (unacceptable). Inclusion of the antioxidant fractions at .01% of meat yielded a shelf-life for these products sufficiently long to allow marketing in the fresh rather than frozen state.

## EXAMPLE 9

Rosemary antioxidant extract produced by the method of Example 3 was dissolved in paprika oleoresin at the rate of .03% with stirring. Samples of the oleoresin with and without rosemary antioxidant extract were incubated at 100 °C. for 54 hours in accordance with the method of Example 2. At 18 hour intervals the oleoresin samples were measured for colour value (ASTA Official Method 20.1) using a spectrophotometer. Results are shown in Figure 4 which demonstrates the effectiveness of the rosemary antioxidant fraction in protecting against oxidative colour loss of the carotenoid pigments. After 18 hours of accelerated storage there was no colour loss in the treated oleoresin but a 12% loss in the untreated.

From the foregoing, it is apparent that a preferred composition of the invention may be obtained by extracting rosemary and sage in accordance with the process of Example 3. These rosemary and sage extracts were analysed using GC, GC/MS and high resolution GC/MS according to the following procedures.

### (a) One-Stage Derivatization

0.1g of sample was dissolved in 1ml of pyridine. The obtained solution was mixed with 0.03g of sodium sulphate as a drying agent. 0.5ml of the dried solution was transferred into a 5ml Reacti-Vial and mixed with 0.5ml of Sylon BFT® supplied by Supelco (containing 99% BSTFA[1]and 1% TMCS[2]). The obtained mixture was heated for 20 mins at 60 °C, then cooled for 20 mins at room temperature before injection. Sylon BFT® is a strong trimethyl silicon (TMS) donor. TMS is effective in replacing hydrogen (H) in all OH groups.

### (b) Two-Stage Derivatization

0.05g of the sample was first dissolved in 2ml benzene and mixed with 2ml of 12% boron trifluoride in methanol[3], then heated for 15 mins at 80 °C and cooled to room temperature. After adding 1 ml of water and allowing phase separation, the methylated sample dissolved in benzene was collected from the upper (lipophillic) layer. This process is effective in replacing hydrogen (H) with a methyl group ($CH_3$) in carboxylic acid (COOH) structures only.

The collected 1.2ml of methylated sample was mixed with 1ml of Sylon BFT®, heated for 20 mins at 60 °C, then cooled for 20 mins at room temperature prior to injection, thus effecting TMS replacement of H in all remaining OH groups.

### (c) Equipment

GC analyses were carried out on a Hewlett Packard gas chromatograph (model HP5890 with HP3396 Integrator) using a 60m x 0.2mm SP-2100 column over a temperature range of 60 °C to 280 °C.

GC/MS analyses were carried out in duplicate using two different systems. The first comprised the same column and temperature range as for GC (above) but on a Varian-Vista gas chromatograph with a VG ANALYTICAL double focusing magnetic mass spectrometer coupled with a VG data system 11-250. The second comprised a 30m x 0.25mm SP-1 column over a temperature range of 90 °C to 320 °C on a CARLO-ERBA high resolution gas chromatograph model 5160 with a FINNIGAN MAT quadrapole mass spectrometer with a SUPER INCOS data system.

High resolution MS was carried out on a KRATOS MS-50 high resolution double focusing magnetic mass spectrometer with a KRATOS DS-55 data system with both derivatized and underivatized samples.

[1]BSTFA = bis(trimethylsilyl)-trifluoroacetamide.

[2]TMCS = trimethylchlorosilane.

[3]According to the micro-esterification procedure with $BF_3$-methanol (12% w/w) described in the Supelco GC Bulletin No. GC 721 I.

### (d) Standard

An antioxidant extract of sage, prepared according to the procedure of Example 3 was dissolved in methanol at 60 °C. The solution was cooled and chilled in a domestic freezer to precipitate the less-soluble portion of the extract. The remaining solution was diluted with water (10x) to induce further precipitation of insoluble material. The remaining solution was then extracted with hexane and the solvent removed by vacuum distillation. The residual was subjected to GC analysis by the method of (a) and (c) above and used as a standard. GC analysis (after GC/MS identification) showed a composition of 80.32% carnosic acid, 9.82% carnosol and .39% methyl carnosate.

### (e) Results

Data from all three MS analyses based on one-stage, two-stage and underivatized samples enabled the qualitative identification of carnosic acid, carnosol, rosmaridiphenol and rosmanol in the extracts from both rosemary and sage, thus confirming that the major known antioxidant compounds were in fact present. In addition, an unreported compound identified as the methyl ester of carnosic acid (methyl carnosate), was also found in both extracts. The diphenolic structure of this compound indicates an antioxidant capacity.

Comparison of GC and GC/MS data enabled quantitative identification of carnosic acid, methyl carnosate and carnosol in the extracts of both rosemary and sage. These results are shown in Table 8. Rosmaridiphenol and rosmanol could only be tentatively quantified at less than 1.5%.

Table 8 shows that both extracts contain unexpectedly high levels of the antioxidant compounds which confirms their novel antioxidant strength identified in Examples 3 and 4. It can be seen from Table 8 that both the rosemary and sage extracts comprise more than 30% by weight of the antioxidant compounds carnosic acid and methyl carnosate but less than 5% of carnosol. The major antioxidant compound, carnosic acid, is present in both extracts at more than 25% by weight.

As carnosic acid is a good reducing agent as well as an antioxidant, the compositions of the present invention will have good reducing as well as antioxidant properties and be particularly effective in beverage applications.

**TABLE 8**

**GC Analysis Composition (weight%, underivatized basis) of Rosemary and Sage Extracts as per Example 3**

| EXTRACT | CARNOSIC ACID | METHYL CARNOSATE | CARNOSOL | TOTAL |
|---|---|---|---|---|
| Rosemary | 26.5 | 4.2 | 1.8 | 32.5 |
| Sage | 33.0 | 2.0 | 2.3 | 37.3 |

The identification of carnosic acid can be confirmed by its ready oxidation to carnosol in a methanol solution exposed to air for 7-10 days (Brieskorn pers. com. 1990). A sample of the rosemary extract from Example 3 was dissolved in methanol and left to stand exposed to air at room temperature for 10 days. Following evaporation of the methanol the residue was subjected to GC analysis by the method as described above. As a result of the treatment, the proportion of carnosic acid decreased from 26.5% (Table 8) to 4.1%, while carnosol increased from 1.8% (Table 8) to 6.9%, in accordance with expectation.

Labiatae extracts of rosemary and sage prepared using supercritical carbon dioxide by the method of Example 3, together with samples of three commercially available natural rosemary antioxidants, were subjected to GC analysis after one-stage derivatization according to the procedure described above.

TABLE 9

| GC Analysis of Composition (weight%, underivatized basis) of Labiatae Antioxidant Extracts as per Example 3 | | | | |
|---|---|---|---|---|
| EXTRACT | CARNOSIC ACID | METHYL CARNOSATE | CARNOSOL | TOTAL |
| Rosemary | 26.3 | 4.2 | 1.6 | 32.1 |
| Sage | 31.9 | .8 | 1.4 | 34.1 |
| Flavor Guard II® | 1.9 | .3 | 4.5 | 6.7 |
| Spice Extract AR® | 3.0 | .3 | 2.6 | 5.9 |
| Herbalox Type "O"® | 5.6 | .2 | .8 | 6.6 |

Table 9 demonstrates the significantly higher concentration of carnosic acid and methyl carnosate in the samples of the present invention as compared with the commercial products, and the relatively lower proportion of carnosol. Whereas the total of carnosic acid and methyl carnosate exceeds 30% in the samples of the present invention, the commercial samples are close to only 5%. The carnosic acid content is in excess of 25% in both the rosemary and sage samples. Furthermore, the total content of measured antioxidants is approximately four times higher in the samples of the present invention as compared with the commercial samples. This same ratio is close to the increased usage rate observed to be necessary for the commercial products to provide the same level of antioxidant protection as 0.02% of the Labiatae extracts of the present invention, as demonstrated in Example 4.

A Labiatae extract of thyme (T. vulgaris) was prepared using supercritical carbon dioxide by the method of Example 3 and subjected to GC analysis after one-stage derivatization as described above. The compositional results are shown in Table 10.

TABLE 10

GC Analysis of Composition (weight%, underivatized basis) of Thyme Extract as per Example 3

| EXTRACT | CARNOSIC ACID | METHYL CARNOSATE | CARNOSOL | TOTAL |
|---|---|---|---|---|
| Thyme | 4.8 | .3 | .8 | 5.9 |

The thyme composition, as shown in Table 10, contains significantly less of the antioxidant compounds as compared with the rosemary and sage compositions. However, a desired composition containing a minimum of 25% carnosic acid can be formulated by blending 80% of the sage composition with 20% of the thyme composition. It will be obvious to those skilled in the art, that by such blending of Labiatae extracts of the invention it is possible to meet the preferred content of antioxidant strength for compositions of the present invention and also possible to standardize a composition of known antioxidant strength.

**EXAMPLE 10**

2.5g each of the rosemary and sage extracts produced according to the method of Example 3 were combined and dissolved in 95% grain ethanol to which was added 5g of activated charcoal. After mixing overnight the mixture was filtered and the solution recovered. Ethanol was removed from the solution by evaporation under vacuum to allow recovery of 3.85 grams of light brown crystals.

A sample of both the original material and the resulting crystals were subjected to measurement of antioxidant activity in prime steam lard at a usage of 0.02% according to the method of Example 2. Results are shown in Table 11. The partially decolorized product is shown to be not diminished in antioxidant activity as compared with the original product, while the color is improved from light greenish-brown to light

brown with a 77% recovery.

**TABLE 11**

**Antioxidant Activity Before and After Partial Decolorization**

| TREATMENT | Peroxide Value (meq/kg) |
|---|---|
| Rosemary/Sage (before decolorization) | 1.6 |
| Rosemary/Sage (after decolorization) | 1.4 |
| Control | 28.5 |
| Base | .5 |

The composition of this invention is a new and improved Labiatae extract for use as a food, cosmetic and pharmaceutical antioxidant. The composition is made using supercritical carbon dioxide and is free from contact with organic solvents and contains less than 5ml essential oil per 100 grams. The composition is both oil and ethanol soluble for the use intended and may be easily incorporated into end-products where it promotes shelf-life and quality. The antioxidant activity of the composition is typically not less than that of the synthetic antioxidants BHA/BHT (1:1) at a usage level of 0.02% and is superior to several commercially available Labiatae extract antioxidants produced by prior art processes. The composition of this invention is uniquely characterised by comprising greater than 25% by weight of the natural Labiatae antioxidant compound carnosic acid.

**Claims**

**1.** A process for extracting antioxidants from the Labiatae family of domestic herbs, comprising:
grinding the dried leaves of the herbs into a fine powder of less than 20 mesh;
extracting the powdered leaves with supercritical fluid carbon dioxide without organic cosolvents at a pressure of from 350 bar to 1000 bar, a temperature of from 31 °C. to 120 °C., and with a fluid density of from 0.6 kg/l to 1.0 kg/l; and
precipitating the antioxidant from the supercritical fluid in a first precipitation under a pressure of from 100 bar to 150 bar, at a temperature of from 40 °C. to 100 °C., and with a fluid density of from 0.2 kg/l to 0.4 kg/l.

**2.** A process as claimed in claim 1, wherein the leaves are ground at a temperature not exceeding -20 °C.

**3.** A process as claimed in claim 1, wherein the powdered leaves are extracted with supercritical fluid carbon dioxide at a pressure of from 500 bar to 1000 bar, a temperature of from 90 °C. to 110 °C., and with a fluid density of from 0.8 kg/l to 1.0 kg/l.

**4.** A process as claimed in claim 1, wherein the antioxidant is precipitated from the supercritical fluid under a pressure of from 110 bar to 125 bar, a temperature of from 65 °C. to 85 °C., and with a fluid density of from 0.25 kg/l to 0.35 kg/l.

**5.** A process as claimed in claim 1, further comprising precipitating the essential oils from the carbon dioxide in a second precipitation under the non-supercritical conditions of pressure in the range of from 20 bar to 50 bar, and temperature of from -10 °C. to 25 °C. wherein the gas density is less than 0.15 kg/l.

6. A process as claimed in claim 5, wherein 70% to 75% of the extract dissolved in the supercritical fluid carbon dioxide is precipitated in the first precipitation with the balance of material being precipitated in the second precipitation.

7. A process as claimed in claim 1, wherein the herbs are rosemary or sage or both.

8. A process as claimed in claim 1, wherein the herbs are any of rosemary, sage, oregano or thyme.

9. An antioxidant composition obtainable from the supercritical fluid carbon dioxide extraction of a Labiatae family herb according to any of claims 1 to 8, the antioxidant composition yielding a peroxide value of 4 meq/kg or less when added at a concentration of 0.03% to prime steam lard and incubated in a loosely capped container at 100 °C for 18 hours, the antioxidant composition having at least 25% by weight carnosic acid, less than 5 ml water distillable essential oil per 100 grams, and being substantially free of a $C_1$-$C_6$ organic solvent.

10. An antioxidant composition as claimed in claim 9, dissolved or dispersed in a food-grade animal or vegetable oil or fat.

11. An antioxidant composition as claimed in claim 9, dissolved in food-grade grain alcohol.

12. An antioxidant composition as claimed in claim 9, wherein the herb includes rosemary, sage or a mixture thereof.

13. An antioxidant composition for use in foods, medicines and cosmetics, comprising: 25-40% by weight carnosic acid, 1-10% by weight a $C_1$-$C_3$ ester of carnosic acid, and 0-5% by weight carnosol, said composition having less than 5 ml water distillable essential oil per 100 grams, and being substantially free of $C_1$-$C_6$ organic solvents.

14. An antioxidant composition as claimed in claim 13, wherein the total of carnosic acid and its ester is in the range 25-40% by weight.

15. An antioxidant composition obtainable from the supercritical fluid carbon dioxide extraction of a Labiatae family herb according to any of claims 1 to 8, including at least one of rosemary or sage, comprising: 25-45% by weight carnosic acid and 0-10% by weight a $C_1$-$C_3$ ester of carnosic acid, said composition having less than 5 ml water distillable essential oil per 100 grams, and said composition yielding a peroxide value not exceeding 4 meq/kg when added at a concentration of 0.02% by weight to prime steam lard and incubated in a loosely capped container at 100 °C for 18 hours.

16. An antioxidant composition as claimed in claim 15, which has been at least partially decolorized by dissolving in food-grade grain alcohol and treating at ambient temperature with activated charcoal.

17. An antioxidant composition as claimed in claim 16, being substantially free of organic solvents other than ethanol.

18. An antioxidant composition as claimed in claim 17, dissolved or dispersed in a food-grade animal or vegetable oil or fat.

19. An antioxidant composition as claimed in claim 17, dissolved or dispersed in an oil, grease, wax or fat for use in a medicinal or cosmetic product for human use.

## Patentansprüche

1. Verfahren zur Extraktion von Antioxidanzien aus domestizierten Kräutern aus der Familie der Labiatae, das umfaßt:
Zermahlen der getrockneten Blätter der Kräuter zu einem feinen Pulver von weniger als 20 mesh;
Extraktion der pulverisierten Blätter mit überkritischem Kohlendioxid-Fluid ohne organische Kosolvenzien bei einem Druck von 350 bar bis 1000 bar, einer Temperatur von 31 °C bis 120 °C und mit einer Fluiddichte von 0,6 kg/l bis 1,0 kg/l; und

Ausfällen des Antioxidans aus dem überkritischen Fluid in einer ersten Ausfällung unter einem Druck von 100 bar bis 150 bar, bei einer Temperatur von 40 °C bis 100 °C und mit einer Fluiddichte von 0,2 kg/l bis 0,4 kg/l.

**2.** Verfahren nach Anspruch 1, wobei die Blätter bei einer Temperatur zermahlen werden, die -20 °C nicht übersteigt.

**3.** Verfahren nach Anspruch 1, wobei die pulverisierten Blätter mit überkritischem Kohlendioxid-Fluid bei einem Druck von 500 bar bis 1000 bar, einer Temperatur von 90 °C bis 110 °C und mit einer Fluiddichte von 0,8 kg/l bis 1,0 kg/l extrahiert werden.

**4.** Verfahren nach Anspruch 1, wobei das Antioxidans aus dem überkritischen Fluid unter einem Druck von 110 bar bis 125 bar, einer Temperatur von von 65 °C bis 85 °C und mit einer Fluiddichte von 0,25 kg/l bis 0,35 kg/l ausgefällt wird.

**5.** Verfahren nach Anspruch 1, das außerdem Ausfällen der ätherischen Öle aus dem Kohlendioxid in einer zweiten Ausfällung unter den nicht überkritischen Bedingungen von Druck im Bereich von 20 bar bis 50 bar und Temperatur von -10 °C bis 25 °C umfaßt, wobei die Gasdichte weniger als 0,15 kg/l beträgt.

**6.** Verfahren nach Anspruch 5, wobei 70 % bis 75 % des in dem überkritischen Kohlendioxid-Fluid gelösten Extraktes in der ersten Ausfällung ausgefällt werden und der Rest des Materials in der zweiten Ausfällung ausgefällt wird.

**7.** Verfahren nach Anspruch 1, wobei die Kräuter Rosmarin, Salbei oder beides sind.

**8.** Verfahren nach Anspruch 1, wobei die Kräuter irgendwelche aus Rosmarin, Salbei, Oregano oder Thymian sind.

**9.** Antioxidanzien-Zusammensetzung, erhältlich nach irgendeinem der Ansprüche 1 bis 8 aus der Extraktion eines Krautes aus der Familie der Labiatae mit überkritischem Kohlendioxid-Fluid, wobei
die Antioxidanzien-Zusammensetzung zu einer Peroxidzahl von 4 mEq/kg oder weniger führt, wenn sie in einer Konzentration von 0,03 % durch Dampf erhaltenem Schweineschmalz (prime steam lard) zugesetzt und in einem lose verschlossenen Behälter bei 100 °C 18 Stunden lang inkubiert wird,
und die Antioxidanzien-Zusammensetzung wenigstens 25 Gewichtsprozent Carnosinsäure (carnosic acid) und weniger als 5 ml wasserdestillierbare ätherische Öle pro 100 Gramm aufweist und im wesentlichen frei von einem organischen $C_1$-$C_6$-Lösungsmittel ist.

**10.** Antioxidanzien-Zusammensetzung nach Anspruch 9, die in einem nahrungsmittelgeeigneten tierischen oder pflanzlichen Öl oder Fett gelöst oder dispergiert ist.

**11.** Antioxidanzien-Zusammensetzung nach Anspruch 9, die in nahrungsmittelgeeignetem Getreidealkohol gelöst ist.

**12.** Antioxidanzien-Zusammensetzung nach Anspruch 9, wobei das Kraut Rosmarin, Salbei oder ein Gemisch davon einschließt.

**13.** Antioxidanzien-Zusammensetzung zur Anwendung in Lebensmitteln, Medikamenten und Kosmetika, die umfaßt:
25 - 40 Gewichtsprozent Carnosinsäure (carnosic acid), 1 - 10 Gewichtsprozent eines $C_1$-$C_3$-Esters von Carnosinsäure und 0 - 5 Gewichtsprozent Carnosol, wobei die Zusammensetzung weniger als 5 ml wasserdestillierbare ätherische Öle pro 100 Gramm enthält und im wesentlichen frei von organischen $C_1$-$C_6$-Lösungsmitteln ist.

**14.** Antioxidanzien-Zusammensetzung nach Anspruch 13, wobei die Gesamtsumme von Carnosinsäure und ihres Esters im Bereich von 25 - 40 Gewichtsprozent liegt.

**15.** Antioxidanzien-Zusammensetzung, erhältlich nach irgendeinem der Ansprüche 1 bis 8 aus der Extraktion eines Krautes aus der Familie der Labiatae mit überkritischem Kohlendioxid-Fluid,
und die mindestens eines von Rosmarin und Salbei einschließt und umfaßt:
25 - 45 Gewichtsprozent Carnosinsäure (carnosic acid) und 0 - 10 Gewichtsprozent eines $C_1$-$C_3$-Esters von Carnosinsäure, wobei die Zusammensetzung weniger als 5 ml wasserdestillierbare ätherische Öle pro 100 Gramm aufweist, und die Zusammensetzung zu einer Peroxidzahl nicht über 4 mEq/kg führt, wenn sie in einer Konzentration von 0,02 Gewichtsprozent durch Dampf erhaltenem Schweineschmalz (prime steam lard) zugesetzt und in einem lose verschlossenen Behälter 18 Stunden lang bei 100 °C inkubiert wird.

**16.** Antioxidanzien-Zusammensetzung nach Anspruch 15, welche durch Lösen in nahrungsmittelgeeignetem Getreidealkohol und Behandlung mit Aktivkohle bei Raumtemperatur wenigstens teilweise entfärbt wurde.

**17.** Antioxidanzien-Zusammensetzung nach Anspruch 16, die abgesehen von Ethanol im wesentlichen frei von organischen Lösungsmitteln ist.

**18.** Antioxidanzien-Zusammensetzung nach Anspruch 17, die in einem nahrungsmittelgeeigneten tierischen oder pflanzlichen Öl oder Fett gelöst oder dispergiert ist.

**19.** Antioxidanzien-Zusammensetzung nach Anspruch 17, die in einem für ein medizinisches oder kosmetisches Produkt zur Anwendung beim Menschen verwendbaren Öl, Schmalz, Wachs oder Fett gelöst oder dispergiert ist.

## Revendications

**1.** Procédé pour extraire des anti-oxydants de la famille des labiés parmi les herbes potagères, comportant :
le broyage des feuilles séchées des herbes en une poudre fine de moins de 20 meshs;
l'extraction des feuilles en poudre moyennant de l'anhydride carbonique fluide supercritique sans cosolvants organiques à une pression allant de 350 bar à 1000 bar, à une température allant de 31 °C à 120 °C , et avec une densité de fluide allant de 0,6 kg/l à 1,0 kg/l; et
la précipitation de l'anti-oxydant à partir du fluide supercritique en une première précipitation sous une pression allant de 100 bar à 150 bar, à une température allant de 40 °C à 100 °C, et avec une densité de fluide allant de 0,2 kg/l à 0,4kg/l.

**2.** Procédé selon la revendication 1, dans lequel les feuilles sont broyées à une température ne dépassant pas - 20 °C.

**3.** Procédé selon la revendication 1, dans lequel les feuilles en poudre sont extraites moyennant de l'anhydride carbonique fluide supercritique à une pression allant de 500 bar à 1000 bar, à une température allant de 90 °C à 110 °C, et avec une densité de fluide allant de 0,8 kg/l à 1,0 kg/l.

**4.** Procédé selon la revendication 1, dans lequel l'anti-oxydant est précipité à partir du fluide supercritique sous une pression allant de 110 bar à 125 bar, à une température allant de 65 °C à 85 °C, et avec une densité de fluide allant de 0,25 kg/l à 0,35 kg/l.

**5.** Procédé selon la revendication 1, comportant par ailleurs la précipitation des huiles essentielles à partir de l'anhydride carbonique en une seconde précipitation dans les conditions non-supercritiques de pression dans la plage allant de 20 bar à 50 bar et à une température allant de - 10 °C à 25 °C, dans lequel la densité du gaz est inférieure à 0,15 kg/l.

**6.** Procédé selon la revendication 5, dans lequel 70% à 75% de l'extrait dissout dans l'anhydride carbonique fluide supercritique sont précipités dans la première précipitation, le solde de la matière étant précipité dans la seconde précipitation.

**7.** Procédé selon la revendication 1, dans lequel les herbes sont du romarin, de la sauge, ou les deux.

**8.** Procédé selon la revendication 1, dans lequel les herbes sont indifféremment du romarin, de la sauge, de l'origan ou du thym.

**9.** Composition d'anti-oxydants pouvant être obtenue à partir de l'extraction moyennant de l'anhydride carbonique fluide supercritique d'une herbe de la famille des labiés selon l'une quelconque des revendications 1 à 8, la composition d'anti-oxydants fournissant une valeur de peroxyde de 4 meq/kg ou moins lorsqu'elle est ajoutée en concentration de 0,03% à du saindoux obtenu par vapeur (prime steam lard) et incubée dans un récipient couvert d'un couvercle non-étanche à 100°C pendant 18 heures, la composition d'anti-oxydants ayant au moins 25% en poids d'acide carnosique, moins de 5 ml d'huiles essentielles distillables dans l'eau par 100 grammes, et étant substantiellement exempte de solvant organique $C_1$-$C_6$.

**10.** Composition d'anti-oxydants selon la revendication 9, dissoute ou dispersée dans une huile ou une graisse animale ou végétale de qualité alimentaire.

**11.** Composition d'anti-oxydants selon la revendication 9, dissoute dans de l'alcool éthylique de qualité alimentaire.

**12.** Composition d'anti-oxydants selon la revendication 9, dans laquelle l'herbe comporte du romarin, de la sauge ou un mélange de ces derniers.

**13.** Composition d'anti-oxydants pour usage dans des aliments, médicaments et cosmétiques, comportant: 25% à 40% en poids d'acide carnosique , 1% à 10% en poids d'ester $C_1$-$C_3$ d'acide carnosique, et 0% à 5% en poids de carnosol, ladite composition ayant moins de 5 ml d'huile essentielle distillable dans l'eau par 100 grammes, et étant substantiellement exempte de solvants organiques $C_1$-$C_6$.

**14.** Composition d'anti-oxydants selon la revendication 13, dans laquelle le total d'acide carnosique et de son ester est de l'ordre de 25% à 40% en poids.

**15.** Composition d'anti-oxydants pouvant être obtenue à partir de l'extraction moyennant de l'anhydride carbonique fluide supercritique d'une herbe de la famille des labiés selon l'une quelconque des revendications 1 à 8, comprenant au moins une herbe de romarin ou de sauge, comportant: 25% à 45% en poids d'acide carnosique et 0% à 10% en poids d'un ester $C_1$-$C_3$ de l'acide carnosique, ladite composition ayant moins de 5ml d'huile essentielle distillable dans l'eau par 100 grammes, et ladite composition fournissant une valeur de peroxyde ne dépassant pas 4 meq/kg lorsqu'elle est ajoutée en concentration de 0,02% en poids à du saindoux obtenu par vapeur (prime steam lard) et incubée dans un récipient couvert par un couvercle non étanche à 100°C pendant 18 heures.

**16.** Composition d'anti-oxydants selon la revendication 15, qui a été du moins partiellement décolorée par sa dissolution dans de l'alcool éthylique de qualité alimentaire et le traitement à température ambiante avec du charbon activé.

**17.** Composition d'anti-oxydants selon la revendication 16, étant substantiellement exempte de solvants organiques autre que l'éthanol.

**18.** Composition d'anti-oxydants selon la revendication 17, dissoute ou dispersée dans une huile ou une graisse animale ou végétale de qualité alimentaire.

**19.** Composition d'anti-oxydants selon la revendication 17, dissoute ou dispersée dans une huile, une matière grasse, une cire ou graisse pour usage dans un produit médicinal ou cosmétique à usage humain.

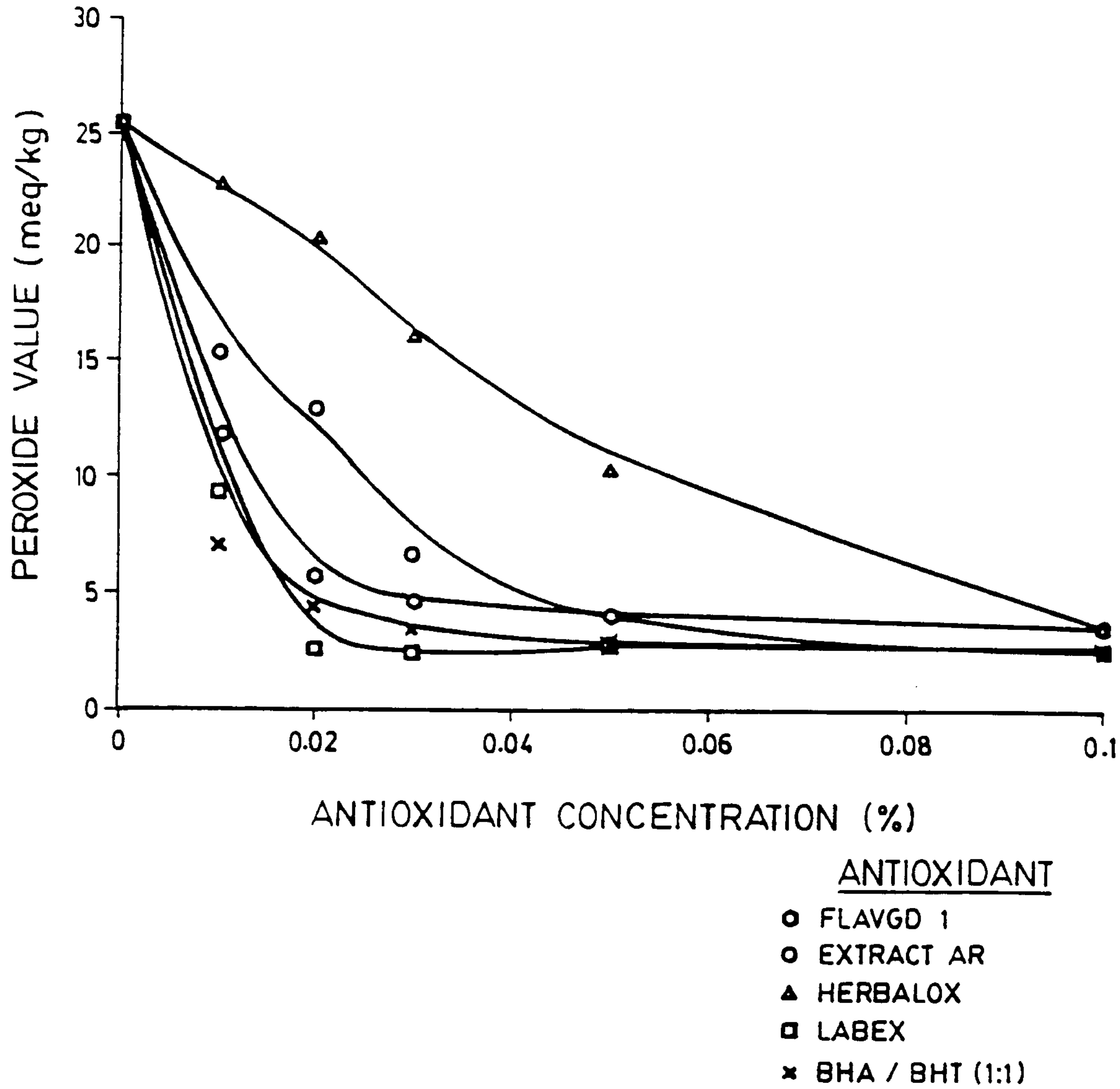


PRIME STEAM LARD 100 DEG. C. FOR 18 HOURS
MEANS OF 3 REPLICATES

OPTIMUM USAGE RATES
AGAINST COMMERCIAL STANDARDS

FIG. 1

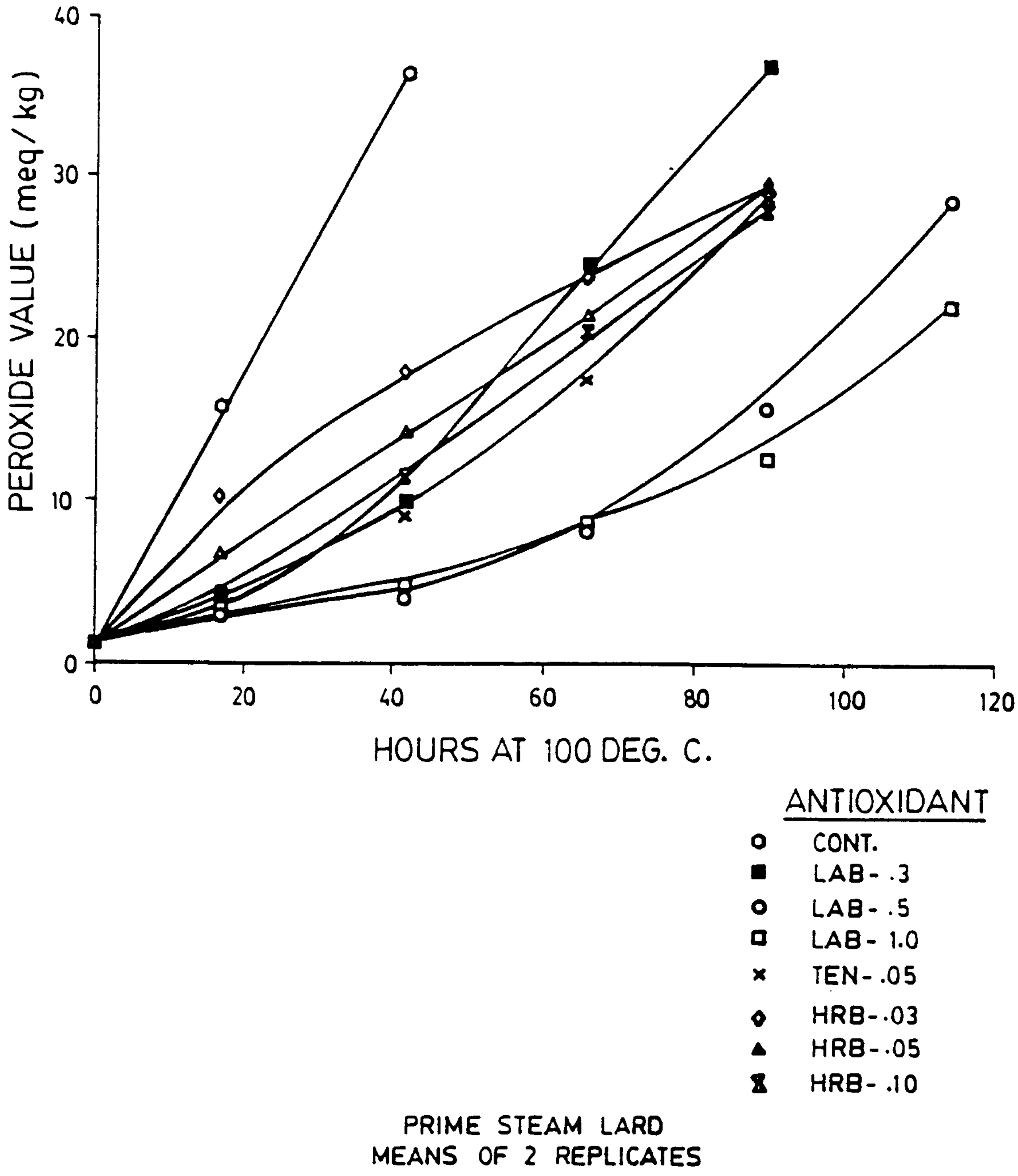


RELATIVE ANTIOXIDANT STRENGTH AGAINST COMMERCIAL STANDARDS

FIG. 2

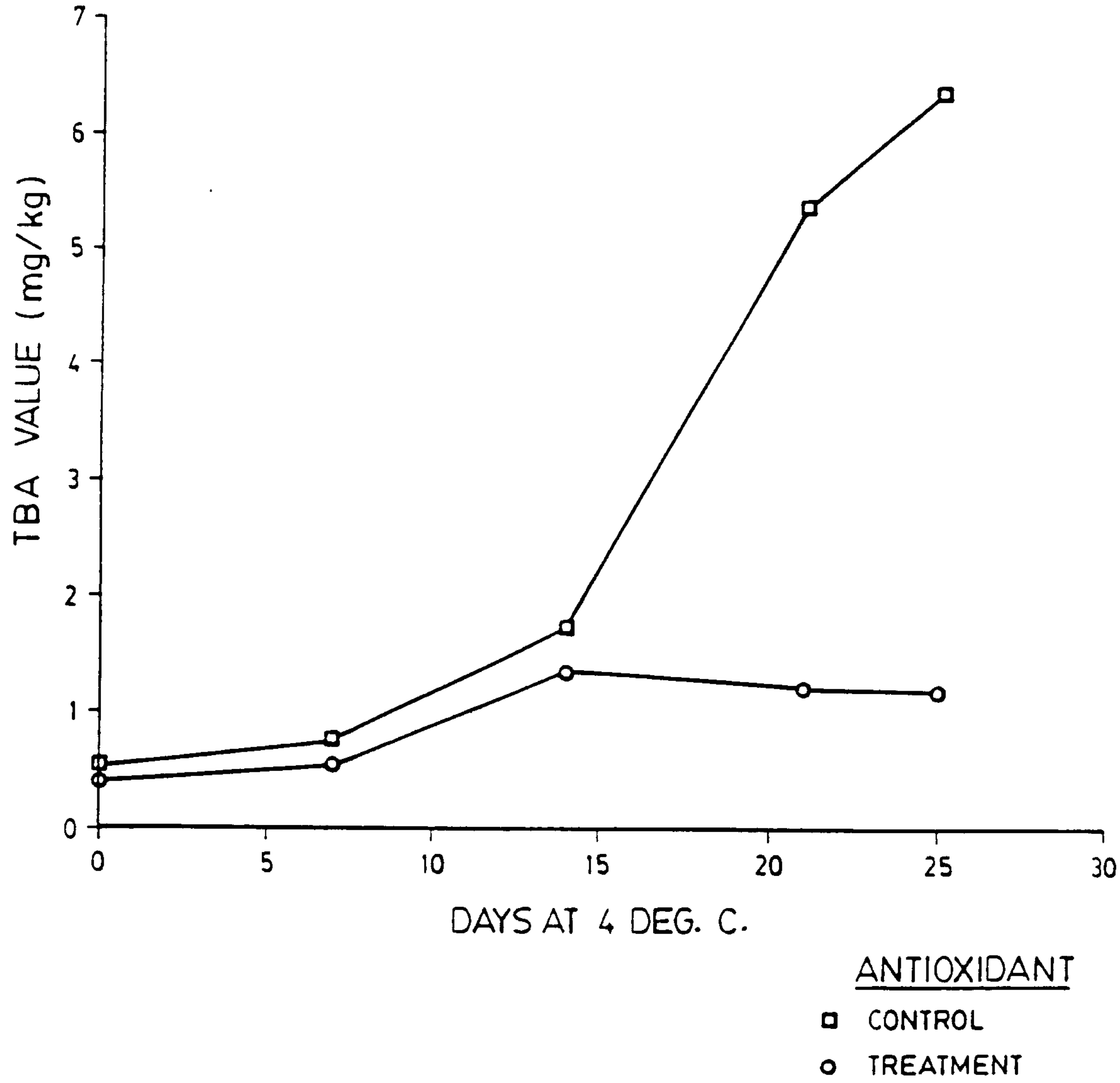


MEANS OF 4 REPLICATES

COOKED CHICKEN STORAGE TEST
MECHANICALLY DEBONED CHICKEN

FIG. 3

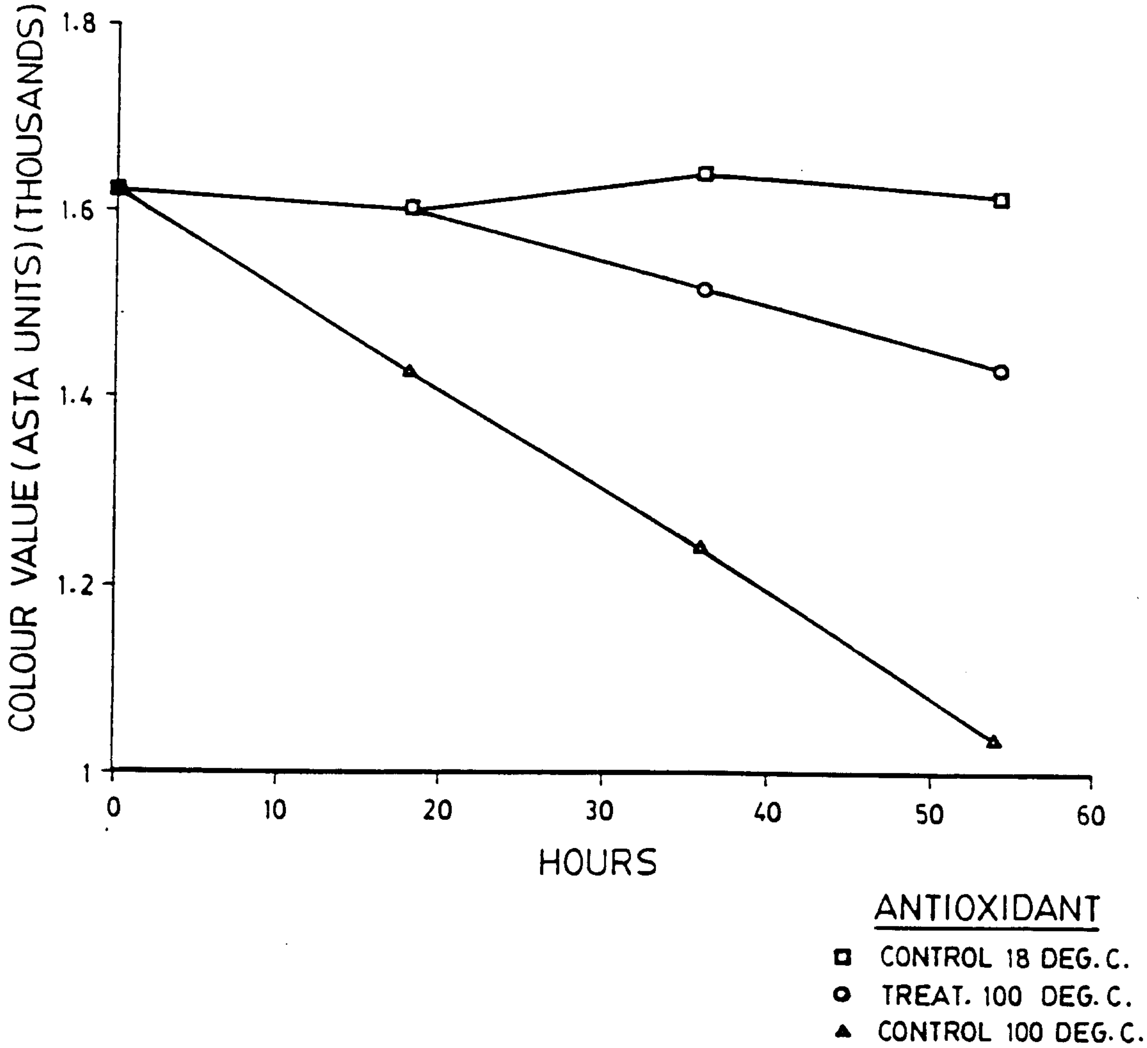


MEANS OF 3 REPLICATES

PAPRIKA OLEORESIN
COLOUR VALUE TEST

FIG. 4